# EUROPEAN PATENT APPLICATION

(11) **EP 4 400 368 A1**
(43) Date of publication of application: **17.07.2024**
(21) Application number: 21956300.4
(22) Date of filing: 07.09.2021
(51) Int. Cl.: B60R 11/02, B60K 35/00, B60K 37/00, B65H 75/44

(54) **WIRE HARNESS ACCOMMODATING MECHANISM FOR SLIDING SCREEN, SLIDING SCREEN ASSEMBLY, AND VEHICLE**

(71) Applicant: Zhejiang Smart Intelligence Technology Co., Ltd., Ningbo, Zhejiang 315336 (CN)
(72) Inventor: CAI, Hongjie, Hangzhou Bay New District Ningbo, Zhejiang 315336 (CN); JIANG, Jian, Hangzhou Bay New District Ningbo, Zhejiang 315336 (CN)
(74) Representative: Zaboliene, Reda
(86) International application number: PCT/CN2021/116941
(87) International publication number: WO 2023/035111

(57) **Abstract**

A wire harness accommodating mechanism for a sliding screen, a sliding screen assembly, and a vehicle. The sliding screen (1) is movably provided at a front panel of a cab of the vehicle. The wire harness accommodating mechanism comprises: an accommodating body (2), provided with a sliding port, the sliding port being configured to allow the sliding screen (1) to reciprocate in a defined direction thereof; an accommodating reel (3), configured to wind a wire harness (5) of the sliding screen (1); and a driving mechanism (4) is configured to output a driving force to drive the accommodating reel (3) to retract/release the wire harness (5) when the sliding screen (1) moves.

## Description

### TECHNICAL FIELD

The present document relates to a field of vehicle interior technology, in particular to a wire harness accommodating mechanism for a sliding screen, a sliding screen assembly, and a vehicle.

### DESCRIPTION OF RELATED ART

With the continuous popularization of vehicles, people's requirements for the functions and comfort of vehicles are increasingly high. The central display screen, which serves for function control, information output, and entertainment, has become an important component in the vehicle that meets corresponding requirements and enhances leisure and entertainment comfort of passengers. Therefore, the demand for the central display screen to be able to move between the cab and the passenger cab is gradually increasing, and this kind of central display screen is also known as a sliding screen.

During the movement of the sliding screen between the cab and the passenger cab, the wire harnesses connected to the sliding screen follow the movement of the sliding screen. However, these wire harnesses will not only interfere with peripheral components during the movement of the sliding screen, but also suffer damage due to long-term pulling.

### SUMMARY

In view of the above problems, the present document provides a wire harness accommodating mechanism, a sliding screen assembly, and a vehicle for overcoming or at least partially solving the above problems.

An object of the present document is to provide a wire harness accommodating mechanism for a sliding screen, which can be movably arranged at a front panel of the vehicle. The wire harness accommodating mechanism includes:

A accommodating body being equipped with a sliding port, which is configured for allowing the sliding screen to move back and forth along a direction limited by the sliding port;

An accommodating reel for winding the wire harness of the sliding screen;

A driving mechanism for outputting a driving force to drive the accommodating reel to retract or release the wire harness while the sliding screen is moving.

Furthermore, the wire harness accommodating mechanism further includes:

A first transmission mechanism connected to the accommodating reel and the driving motor, for transmitting the driving force of the driving motor to the accommodating reel, to drive the accommodating reel to rotate, thereby causing the accommodating reel to retract or release the wire harness.

Furthermore, the first transmission mechanism includes a bevel gear transmission mechanism.

Furthermore, the accommodating body defines an accommodating space, and the wire harness accommodating mechanism further includes:

A wire tube being arranged within the accommodating space in a predetermined layout to limit a movement trace of the wire harness.

Furthermore, the wire tube is constructed to be a continuous tube or be composed of multiple independent tubes.

Furthermore, a peripheral surface of the accommodating reel is provided with a groove for receiving the wire harness.

Furthermore, the accommodating reel is vertically arranged behind the accommodating body.

Specifically, the present document further provides a sliding screen assembly, which includes a sliding screen and the wire harness accommodating mechanism as described above, wherein the sliding screen is arranged in front of the accommodating body of the wire harness accommodating mechanism.

Furthermore, the sliding screen assembly further includes:

A second transmission mechanism being connected to the sliding screen and the driving motor, to transmit the driving force of the driving motor to the sliding screen and enables the sliding screen to move back and forth along the sliding port.

Furthermore, the second transmission mechanism includes a gear transmission mechanism or a belt transmission mechanism.

Furthermore, the sliding screen assembly further includes:

A slide rail being arranged inside the accommodating body and close to the sliding port, to guide the sliding screen to move along a path limited by the slide rail.

Furthermore, the wire tube of the wire harness accommodating mechanism is fixed to the slide rail.

Specifically, the present document further provides a vehicle including the sliding screen assembly as described above.

According to the present document, by setting a wire harness accommodating mechanism for the sliding screen, the wire harness is wound around the accommodating reel, and is retracted or released when the sliding screen moves, thereby avoiding the messy stacking of the wire harness. Moreover, by means of driving the accommodating reel and the sliding screen simultaneously by the same driving mechanism, the wire harness is retracted on or released from the accommodating reel while the sliding screen is moved, which achieves a synchronous movement of the sliding screen and the wire harness.

Furthermore, the first transmission mechanism includes a bevel gear transmission mechanism, and a transmission ratio of the gears can be adjusted to realize the retracting and releasing of the wire harness under less force. In addition, a separate wire tube is designed to allow the wire harness to pass through the wire tube. The wire tube is arranged in the accommodating space of the accommodating body in a predetermined layout, which can be designed to bypass peripheral components, thereby preventing the wire harness from interfering with the peripheral components during the movement.

The above description is only an overview of the technical solution of the present document. In order to understand the technical solutions of the present document more clearly, implement the technical solutions in accordance with the content of the specification, and make the above and other purposes, features, and advantages of the present document more obvious and understandable, the specific embodiments of the present document are given as below.

Based on the detailed description of the embodiments of the present document in conjunction with the accompanying drawings, those having ordinary skill in the art will further understand the above and other purposes, advantages, and features of the present document.

### BRIEF DESCRIPTION OF THE DRAWINGS

Some specific embodiments of the present document will be described in detail below with reference to the accompanying drawings in an exemplary rather than restrictive manner. The same reference numbers in the drawings indicate the same or similar components or parts. Those having ordinary skill in the art will appreciate that these drawings are not necessarily drawn to scale. In the attached figures:
Figure 1 is a schematic top view of a sliding screen assembly according to an embodiment of the present document;
Figure 2 is a schematic rear view of a sliding screen assembly according to an embodiment of the present document;
Figure 3 is a schematic side view of a sliding screen assembly according to an embodiment of the present document;

In the figure: 1-sliding screen, 2-accommodating body, 21-front wall, 22-rear wall, 23-side wall, 3-accommodating reel, 31-groove, 4-driving mechanism, 5-wire harness, 6-wire tube, 7-first transmission mechanism, 8-second transmission mechanism, 9-slide rail.

### DETAILED DESCRIPTION OF THE EMBODIMENTS

The exemplary embodiments of the present document will be described in more detail below with reference to the accompanying drawings. Although the exemplary embodiments of the present document are shown in the accompanying drawings, it should be understood that the present document may be implemented in various forms and should not be limited by the embodiments described here. On the contrary, these embodiments are provided in order to have a more thorough understanding of the present document and to fully convey the scope of the present document to those having ordinary skill in the art.

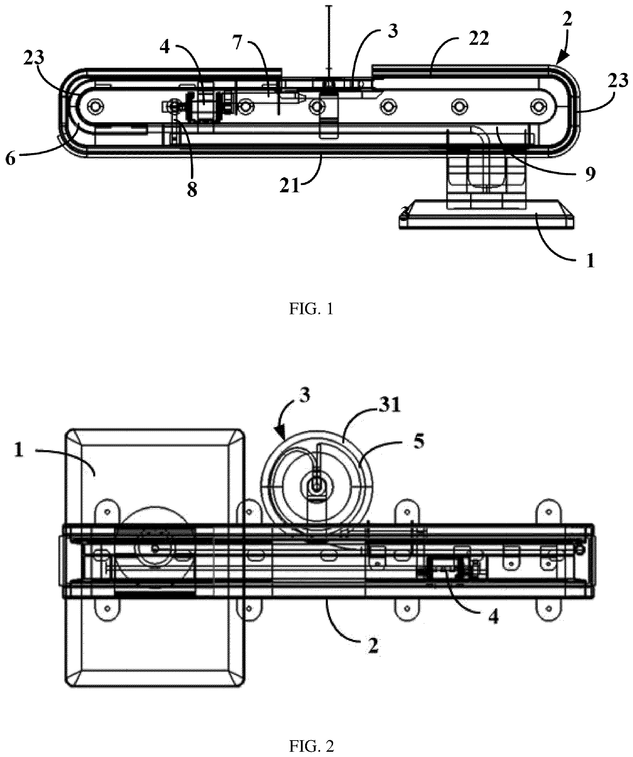

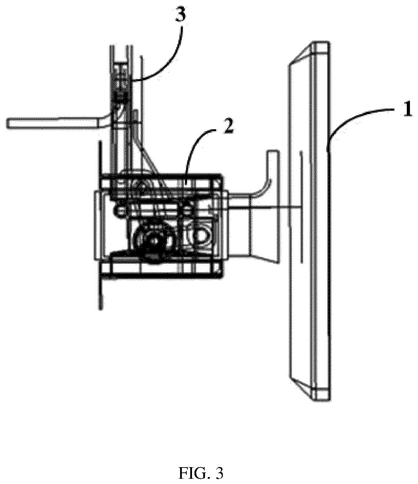

Figure 1 is a schematic top view of a sliding screen assembly according to an embodiment of the present document. Figure 2 is a schematic rear view of a sliding screen assembly according to an embodiment of the present document. Figure 3 is a schematic side view of a sliding screen assembly according to an embodiment of the present document. As shown in Figures 1 to 3, the sliding screen assembly includes a sliding screen 1 and a wire harness accommodating mechanism. The sliding screen 1 is movably installed on a front panel of the cab, and can be moved between the cab and the passenger cab. The wire harness accommodating mechanism can be installed as a whole inside the front panel of the cab, that is, on the front panel at a side away from the cab, or on the front panel at a side facing the cab, and may be installed as requirement.

The embodiment of the present document provides a wire harness accommodating mechanism for sliding screen 1. As shown in Figures 1 and 2, the wire harness accommodating mechanism may include an accommodating body 2, an accommodating reel 3, and a driving mechanism 4. The accommodating body 2 is equipped with a sliding port (not shown in the figure), which allows the sliding screen 1 to move back and forth in a direction limited by the sliding port. The accommodating reel 3 is configured to wind and store a wire harness 5 of the sliding screen 1. The driving mechanism 4 is used to output a driving force to drive the accommodating reel 3 to retract or release the wire harness 5 when the sliding screen 1 moves.

Referring to Figures 1 to 3, the embodiment of the present document further provides a sliding screen assembly, which includes a sliding screen 1 and the wire harness accommodating mechanism as described above.

Specifically, an embodiment of the present document further provides a vehicle including the sliding screen assembly as described above.

According to the embodiments of the present document, by setting a wire harness accommodating mechanism for the sliding screen 1, the wire harness 5 can be wound and stored on the accommodating reel 3, and the wire harness 5 can be retracted or released when the sliding screen 1 moves, thereby avoiding a messy stacking of the wire harness 5.

The following is a detailed explanation of specific embodiments:

### Example 1:

Referring to Figures 1 to 3, the accommodating body 2 of the wire harness accommodating mechanism may be constructed as a structural member with a cavity, which defines an accommodating space. In one embodiment, the accommodating body 2 may include, for example, a bottom wall, a front wall 21, a rear wall 22, and two side walls 23. The front wall 21 is provided with a sliding port, which allows the sliding screen 1 to be installed at the front wall 21 through the sliding port. The rear wall 22 is opposite to the front wall 21, and the two side walls 23 are located on opposite sides of the bottom wall, and between the front wall 21 and the rear wall 22. The rear wall 22 is fixed to the front panel of the cab or the front wall 21 is fixed to the front panel, to set the wire harness accommodating mechanism to the front panel of the cab.

The accommodating reel 3 is provided with a groove 31 in a peripheral surface thereof, and the wire harness 5 is wound and stored in the groove 31. The accommodating reel 3 is vertically arranged behind the accommodating body 2. As the sliding screen 1 is usually arranged in front of the accommodating body 2, this arrangement can reduce the thickness of the wire harness accommodating mechanism in the front and rear directions without hindering the movement of the sliding screen 1, thereby reducing the occupation of the cab, and improving aesthetics. The wire harness accommodating mechanism further includes a wire tube 6. The wire tube 6 allows the wire harness 5 to move within its defined path. A material of the wire tube 6 can be either soft or hard, as long as the wire harness 5 is able to move within its defined path. The wire tube 6 is arranged in the accommodating space in a predetermined layout, which avoids the peripheral components. Preferably, the predetermined layout is a layout extending along edges of the cavity from a position near the accommodating reel 3 to the sliding screen 1. By designing the wire tube 6 separately, the wire harness 5 may pass through the wire tube 6 and the wire tube 6 is arranged in the accommodating space of the accommodating body 2 in a predetermined layout. This predetermined layout may be chosen to avoid peripheral components, thereby preventing the wire harness 5 from interfering with the peripheral components during the movement. The wire tube 6 is constructed as a continuous tube or being composed of multiple independent tubes. As compared to the embodiment that the wire tube 6 is composed of multiple independent tubes, the wire tube 6 being a continuous tube makes the wire harness 5 more convenient to install and fix, and makes the assembly of the wire harness 5 into the wire tube 6 be more convenient and efficient. As compared to the embodiment that the wire tube 6 is constructed as a continuous tube, the wire tube 6 being composed of multiple independent wire tube components makes the cost be lower and the installation position be more flexible.

The driving mechanism 4 is further configured to drive the sliding screen 1 to move back and forth, so that the accommodating reel 3 can retract or release the wire harness 5 while the sliding screen 1 is moving. That is to say, the driving mechanism 4 simultaneously drives the sliding screen 1 and the accommodating reel 3. The driving mechanism 4 may include two output shafts, which are disposed in opposite directions. One of the output shafts outputs a driving force to drive the accommodating reel 3 to rotate, and the other one of the output shafts outputs a driving force to drive the sliding screen 1 to move. These two output shafts can achieve synchronous rotation. By means of driving the accommodating reel 3 and the sliding screen 1 simultaneously by the same driving mechanism 4, the wire harness 5 is retracted or released by the accommodating reel 3 while the sliding screen 1 is moving, which achieves synchronous movement of the sliding screen 1 and the wire harness 5.

The wire harness accommodating mechanism further includes a first transmission mechanism 7, which is connected to the accommodating reel 3 and an output shaft of the drive motor, to transmit the driving force of the drive motor to the accommodating reel 3 and rotate the accommodating reel 3, so that the wire harness 5 can be retracted around and released from the accommodating reel 3. For example, the first transmission mechanism 7 may include a bevel gear transmission mechanism. In this embodiment, an axis of the output shaft of the driving motor is perpendicular to an axis of a rotation shaft of the accommodating reel 3.

The sliding screen assembly further includes a slide rail 9, which is arranged in the accommodating body 2 and is close to the sliding port, for guiding the sliding screen 1 to move along the path limited by the slide rail 9. The slide rail 9 is of the same length and extends along the same direction as the sliding port. The slide rail 9 is connected to the sliding screen 1 and is arranged to an inner side of the front wall 21 of the accommodating body 2. The sliding screen assembly can further include a second transmission mechanism 8, which is respectively connected to the sliding screen 1 and another output shaft of the driving motor, for transmitting the driving force of the driving motor to the sliding screen 1 and allowing the sliding screen 1 to move back and forth along the sliding port. For example, the second transmission mechanism 8 may include a gear transmission mechanism or a belt transmission mechanism.

The first transmission mechanism 7 and the second transmission mechanism 8 may include a worm or screw rod and at least one gear to achieve the purpose of transmitting rotational power, and the wire harness 5 can be retracted and released with less force by adjusting a transmission ratio of the gear and a lead of the worm or screw rod.

### Example 2:

The differences between the second embodiment and the first embodiment is the structures of the driving mechanism 4, the first transmission mechanism 7, and the second transmission mechanism 8. In this embodiment, the driving mechanism 4 only includes one output shaft, and the driving force output by the output shaft simultaneously drives the accommodating reel 3 to rotate and the sliding screen 1 to move.

The first transmission mechanism 7 and the second transmission mechanism 8 may include a worm or screw rod and at least one gear, but the combination manners of the worm or screw rod with the at least one gear are different. Ultimately, the rotation of the driving motor along one axis can be transformed into the rotation of the accommodating reel 3 along another axis perpendicular to that axis, and the rotation of the driving motor can be transformed into back and forth movement of the sliding screen 1 along the sliding port.

At this point, those having ordinary skill in the art could identify that although exemplary embodiments of the present document have been fully illustrated and described herein, without departing from the spirit and scope of the present document, many other variations or modifications that comply with the principles of the present document can still be directly determined or derived from the disclosure. Therefore, the scope of the present document should be understood and identified as covering all these other variations or modifications.

## Claims

1. A wire harness accommodating mechanism for a sliding screen, the sliding screen being movably arranged at a front panel of a driver cab, the wire harness accommodating mechanism comprising:
an accommodating body being equipped with a sliding port, which is configured for allowing the sliding screen to move back and forth in a direction limited by the sliding port;
an accommodating reel for winding a wire harness of the sliding screen;
a driving mechanism for outputting a driving force to drive the accommodating reel to retract or release the wire harness when the sliding screen moves.

2. The wire harness accommodating mechanism according to claim **1**, wherein the driving mechanism is further configured for driving the sliding screen to move back and forth, to make the wire harness be retracted on or released from the accommodating reel while the sliding screen is moving.

3. The wire harness accommodating mechanism according to claim **2**, further comprising:
a first transmission mechanism connected to the accommodating reel and the driving motor, for transmitting a driving force of the driving motor to the accommodating reel and causing the accommodating reel to rotate, thereby causing the wire harness to be retracted or released by the accommodating reel.

4. The wire harness accommodating mechanism according to claim **3**, wherein the first transmission mechanism comprises a bevel gear transmission mechanism.

5. The wire harness accommodating mechanism according to any one of claims **1-4**, wherein the accommodating body has an accommodating space, and the wire harness accommodating mechanism further comprises:
a wire tube arranged within the accommodating space in a predetermined layout to limit a movement trace of the wire harness.

6. The wire harness accommodating mechanism according to claim **5**, wherein the wire tube is constructed to be a continuous tube or be composed of multiple independent tubes.

7. The wire harness accommodating mechanism according to any one of claims **1-4**, wherein a peripheral surface of the accommodating reel is provided with a groove for receiving the wire harness.

8. The wire harness accommodating mechanism according to any one of claims **1-4**, wherein the accommodating reel is vertically arranged behind the accommodating body.

9. A sliding screen assembly comprising a sliding screen and a wire harness accommodating mechanism as claimed in any one of claims **1-8**, wherein the sliding screen is arranged in front of the accommodating body of the wire harness accommodating mechanism.

10. The sliding screen assembly according to claim **9**, further comprising:
a second transmission mechanism respectively connected to the sliding screen and the driving motor, to transmit the driving force of the driving motor to the sliding screen and cause the sliding screen to move back and forth along the sliding port.

11. The sliding screen assembly according to claim **10**, wherein the second transmission mechanism comprises a gear transmission mechanism or a belt transmission mechanism.

12. The sliding screen assembly according to claim **10** or **11**, further comprising:
a slide rail arranged inside the accommodating body and close to the sliding port, for guiding the sliding screen to move along a path limited by the slide rail.

13. The sliding screen assembly according to claim **12**, wherein the wire tube of the wire harness accommodating mechanism is fixed to the slide rail.

14. A vehicle comprising a sliding screen assembly as claimed in any one of claims **9-13.**
